# FASCICULE DE BREVET EUROPEEN

(11) **EP 1 618 341 B1**
(45) Date de publication et mention de la délivrance du brevet: **05.03.2008**
(21) Numéro de dépôt: 04742564.0
(22) Date de dépôt: 23.04.2004
(51) Int. Cl.: F24H 1/43, F24H 8/00

(54) **ECHANGEUR DE CHALEUR A CONDENSATION**
BRENNWERTWÄRMETAUSCHER
CONDENSATION HEAT EXCHANGER

(30) Priorité: 25.04.2003 FR 0305105
(43) Date de publication de la demande: 25.01.2006
(73) Titulaire: GIANNONI FRANCE, 29600 Morlaix (FR); Le Mer, Joseph, 29252 Plouezoch (FR); Giannoni, Rocco, 20121 Milano (IT)
(72) Inventeur: LE MER, Joseph, F-29252 Plouezoch (FR); GIANNONI, Rocco, I-20121 Milan (IT)
(74) Mandataire: Le Faou, Daniel
(86) Numéro de dépôt international: PCT/FR2004/000990
(87) Numéro de publication internationale: WO 2004/097310

(56) Documents cités:
- EP-A- 0 806 616
- EP-A- 1 160 520
- WO-A-01/90656
- WO-A-94/16272
- GB-A- 2 122 928

## Description

La présente invention concerne un échangeur de chaleur à condensation.

Avantageusement, cet échangeur est associé - directement ou indirectement - à un brûleur, en particulier à gaz ou à fioul.

Cet échangeur est destiné notamment à équiper une chaudière à gaz pour des applications domestiques, en vue d'alimenter un circuit de chauffage central et/ou de fournir de l'eau à usage sanitaire.

L'échangeur de chaleur qui fait l'objet de l'invention, plus précisément, est du type comprenant une enveloppe qui délimite une enceinte à l'intérieur de laquelle est logé au moins un faisceau de tube(s) de section aplatie, du genre décrit dans le document EP-B-0 678 186, auquel on pourra se reporter au besoin.

Dans le document EP-B-0 678 186 est décrit un élément échangeur de chaleur qui consiste en un tube en matériau thermiquement bon conducteur, dans lequel un fluide caloporteur, par exemple de l'eau à réchauffer, est destiné à circuler.

Ce tube est enroulé en hélice et possède une section droite aplatie et ovale dont le grand axe est sensiblement perpendiculaire à l'axe de l'hélice, et chaque spire du tube possède des faces planes qui sont écartées des faces de la spire adjacente d'un interstice de largeur constante, cette largeur étant sensiblement plus faible que l'épaisseur de ladite section droite, l'espacement entre deux spires voisines étant en outre calibré au moyen d'entretoises, lesquelles sont constituées par des bossages formés dans la paroi du tube.

Ce document décrit également des échangeurs de chaleur comportant plusieurs éléments tels que décrits ci-dessus, qui sont agencés de différentes manières dans les divers modes de réalisation exposés.

Un élément échangeur ainsi conçu est capable d'assurer un échange de chaleur très efficace entre, d'une part, des gaz très chauds, lesquels peuvent être générés directement par un brûleur monté dans l'enceinte, ou provenir d'une source extérieure, qui lèchent l'élément tubulaire, et, d'autre part, le fluide à réchauffer, tel que de l'eau, lequel circule à l'intérieur de celui-ci.

En effet, lors de son passage à travers l'interstice entre les spires, suivant une direction approximativement radiale, le flux de gaz chauds vient en contact avec une surface relativement étendue de la paroi de l'élément d'échangeur.

La présente invention a plus particulièrement pour objet de proposer un échangeur de chaleur à condensation, du type général exposé ci-dessus, dont les éléments d'échange de la chaleur sont des faisceaux de tubes plats tels que ceux connus par le EP-B-0 678 186 sus mentionné.

L'enveloppe composant les appareils à condensation du genre exposé ci-dessus, tout comme le (ou les) tube(s), peut être en métal, notamment en acier inoxydable.

Cependant, elle est avantageusement réalisée en matière plastique, comme cela est prévu dans les demandes de brevet français N° 02 12848 du 16 octobre 2002 et N° 03 00775 du 24 janvier 2003.

Dans ce cas, l'échangeur comporte des moyens de contention mécanique du faisceau suivant sa direction axiale, aptes à absorber les efforts de poussée résultant de la pression interne du fluide qui y circule et qui tend à en déformer les parois, en évitant que ces efforts ne soit transmis à l'enveloppe.

On dissocie ainsi les deux rôles jusqu'ici dévolus à l'enveloppe, à savoir servir d'enceinte pour la circulation et l'évacuation des gaz chauds, ainsi que pour le recueil et l'évacuation des condensats, et, d'autre part, assurer la tenue mécanique du faisceau de tubes.

L'échangeur de chaleur selon l'invention comprend deux faisceaux de tubes coaxiaux placés bout à bout, dont l'un fait office d'échangeur primaire et l'autre d'échangeur secondaire, chacun de ces faisceaux consistant en un tube, ou en un groupe de tubes disposés bout à bout, formant un enroulement en hélice, dans lequel la paroi du (des) tube(s) est réalisée dans un matériau thermiquement bon conducteur et présente une section droite aplatie et ovale, dont le grand axe est perpendiculaire, ou approximativement perpendiculaire, à celui de l'hélice, tandis que la largeur de l'interstice séparant deux spires adjacentes est constante et notablement plus faible que l'épaisseur de ladite section droite, ces faisceaux étant montés fixement à l'intérieur d'une enveloppe imperméable aux gaz.

Des moyens étant prévus pour faire circuler au moins un fluide à réchauffer, en particulier de l'eau froide, à l'intérieur du(des) tube(s) constitutif(s) desdits faisceaux, l'enveloppe susmentionnée présentant une manchette d'évacuation des gaz brûlés, et l'échangeur étant ainsi agencé que des gaz chauds alimentant l'échangeur, par exemple générés par un brûleur, traversent radialement, ou approximativement radialement, lesdits faisceaux en passant à travers les interstices séparant ses spires, un système déflecteur étant en outre intercalé entre ces deux faisceaux, et ainsi agencé, que lesdits gaz chauds traversent d'abord l'échangeur primaire, en traversant les interstices séparant ses spires de l'intérieur vers l'extérieur, puis l'échangeur secondaire, en traversant les interstices séparant ses spires cette fois de l'extérieur vers l'intérieur, après quoi ils sont évacués à l'extérieur via la manchette précitée.

Dans les dispositifs proposés jusqu'ici, tels que celui représenté notamment sur la figure 18 du document EP-B-0 678 186 déjà cité, le système déflecteur consiste en un disque en matériau réfractaire (céramique) monté à l'extrémité libre du brûleur; ce disque est garni à sa périphérie d'un joint thermiquement isolant qui s'applique contre l'intérieur du faisceau.

La présente invention a pour principal objectif de perfectionner ce type d'échangeur grâce à un agencement qui permet d'alimenter l'échangeur par un gaz chaud autre que le gaz chaud principal (notamment produit par un brûleur), cet agencement étant de conception simple, et mettant en oeuvre des moyens qui grèvent peu le prix de revient de l'échangeur et n'en augmentent pas l'encombrement de manière significative.

L'échangeur de chaleur à condensation qui fait l'objet de la présente invention comprend donc, comme cela a été précisé plus haut, deux faisceaux de tubes coaxiaux dont l'un fait office d'échangeur primaire et l'autre d'échangeur secondaire, chacun de ces faisceaux consistant en un tube, ou en un groupe de tubes disposés bout à bout, formant un enroulement en hélice, dans lequel la paroi du (des) tube(s) est réalisée dans un matériau thermiquement bon conducteur et présente une section droite aplatie et ovale, dont le grand axe est perpendiculaire, ou approximativement perpendiculaire, à celui de l'hélice, tandis que la largeur de l'interstice séparant deux spires adjacentes est constante et notablement plus faible que l'épaisseur de ladite section droite, ces faisceaux étant montés fixement à l'intérieur d'une enveloppe imperméable aux gaz, des moyens étant prévus pour faire circuler au moins un fluide à réchauffer, tel que de l'eau froide, à l'intérieur du(des) tube(s) constitutif(s) desdits faisceaux, cette enveloppe présentant une manchette d'évacuation des gaz, l'échangeur étant ainsi agencé qu'un premier gaz chaud -dit principal- est admis à l'intérieur de ladite enveloppe et y est canalisé de telle sorte qu'il traverse radialement, ou approximativement radialement, lesdits faisceaux en passant à travers les interstices séparant ses spires, un système déflecteur étant en outre intercalé entre ces deux faisceaux, et ainsi agencé, que ce gaz chaud principal traverse d'abord l'échangeur primaire, en passant entre les interstices séparant ses spires de l'intérieur vers l'extérieur, puis traverse l'échangeur secondaire, en passant entre les interstices séparant ses spires de l'extérieur vers l'intérieur, après quoi il est évacué à l'extérieur via ladite manchette.

Conformément à l'invention, d'une part, ledit système déflecteur (7) est composé de deux plaques (7a, 7b), dites plaques déflectrices, disposées parallèlement et côte à côte, à faible distance l'une de l'autre, et réalisées toutes les deux dans un matériau thermiquement isolant, et, d'autre part, l'échangeur comporte des moyens pour introduire un second gaz chaud - dit additionnel - à l'intérieur de ladite enveloppe (1) entre les deux plaques déflectrices thermiquement isolantes (7a, 7b), et pour le canaliser de telle sorte qu'il traverse directement, radialement, ou approximativement radialement, l'échangeur secondaire, en passant entre les interstices séparant ses spires de l'extérieur vers l'intérieur, soit seul, soit en même temps que le gaz chaud principal qui a déjà traversé les spires du faisceau de tubes faisant office d'échangeur primaire, après quoi il est évacué vers l'extérieur via ladite manchette.

Ces plaques déflectrices, avantageusement en matériau également réfractaire à la chaleur, par exemple à base de céramique, sont de préférence centrées sur ledit axe d'hélice, en étant disposées parallèlement côte à côte, avec un certain espacement, de telle sorte que l'une d'elles ferme un côté du faisceau de tubes qui fait office d'échangeur primaire, tandis que l'autre ferme le côté adjacent (en regard) du faisceau de tubes qui fait office d'échangeur secondaire, et la paroi de l'enveloppe est traversée par un conduit adapté pour amener le gaz chaud additionnel de l'extérieur de l'échangeur à l'intérieur de l'enveloppe, dans l'espace compris entre ces deux plaques, de telle sorte que ce gaz chaud additionnel peut traverser les interstices séparant les spires du faisceau de tubes faisant office d'échangeur secondaire, de l'extérieur vers l'intérieur, soit seul, soit en même temps que le gaz chaud principal, lequel a déjà traversé les spires du faisceau de tubes faisant office d'échangeur primaire, après quoi le - ou les - gaz refroidi(s) est (sont) évacué(s) vers l'extérieur de l'enveloppe et de l'échangeur, via ladite manchette.

Dans un mode de réalisation possible, l'échangeur comporte un brûleur à gaz ou à fioul, logé coaxialement à l'intérieur de l'échangeur primaire, et adapté pour y générer directement le gaz chaud principal.

Par ailleurs, selon un certain nombre de caractéristiques avantageuses, mais non limitatives de l'invention:
- lesdites plaques déflectrices sont des disques fixés chacun, coaxialement, à l'extrémité d'un faisceau, de manière à en obturer l'espace intérieur, ceci de manière étanche aux gaz ;
- lesdites plaques déflectrices sont reliées l'une à l'autre par des entretoises, telles que des tirants, qui permettent d'en calibrer l'écartement mutuel ;
- l'espace intérieur du faisceau de tubes qui fait office d'échangeur primaire est obturé, à une extrémité, par l'une desdites plaques déflectrices et, à son autre extrémité, par une porte fixée sur la façade de l'échangeur, cette porte étant traversée par le brûleur et solidaire de celui-ci ;
- l'espace intérieur du faisceau de tubes qui fait office d'échangeur secondaire est obturé, à une extrémité, par l'une desdites plaques déflectrices et, à son autre extrémité, par la paroi arrière de ladite enveloppe ;
- l'enveloppe est réalisée en matière plastique, tandis que le conduit adapté pour amener le gaz chaud additionnel de l'extérieur de l'échangeur à l'intérieur de l'enveloppe, dans l'espace compris entre ces deux plaques, est en métal, et la paroi de fond de ladite enveloppe présente une ouverture pour le passage et la retenue dudit conduit métallique qui possède un rebord rentrant à l'intérieur de l'enveloppe, ce conduit étant fixé audit rebord par l'intermédiaire d'un joint périphérique en matière thermiquement isolante, par exemple en céramique ;
- ledit conduit a une section droite sensiblement rectangulaire, dont les grands côtés s'étendent parallèlement aux plans desdites plaques déflectrices ;
- le faisceau de tubes qui fait office d'échangeur primaire possède une longueur axiale (et, corrélativement une capacité d'échange thermique) sensiblement plus grande que celle du faisceau de tubes qui fait office d'échangeur secondaire ;
- l'échangeur est adapté pour permettre la circulation et le réchauffage d'un seul fluide en particulier de l'eau froide, à l'intérieur du(des) tube(s) constitutif(s) desdits faisceaux ;
- l'échangeur est adapté pour permettre la circulation et le réchauffage d'au moins deux fluides différents qui circulent séparément à l'intérieur des tubes constitutifs desdits faisceaux ;
- l'échangeur est adapté pour permettre la circulation et le réchauffage de deux fluides différents qui circulent séparément, l'un à l'intérieur du ou des tube(s) constitutif(s) du faisceau qui fait office d'échangeur primaire, l'autre à l'intérieur du ou des tube(s) constitutif(s) du faisceau qui fait office d'échangeur secondaire.

D'autres caractéristiques et avantages de l'invention apparaîtront de la description et des dessins annexés qui en représentent, à simple titre d'exemples non limitatifs des modes de réalisation possibles.

Sur ces dessins :
- la figure 1 est une vue de dessus schématique d'un premier mode de réalisation de l'échangeur faisant l'objet de l'invention, coupé par un plan horizontal médian référencé I-I sur la figure 2 ;
- la figure 2 est une vue de face schématique de l'appareil de la figure 1, coupé par un plan vertical médian référencé II-II sur la figure 1;
- les figures 3 à 6 sont des vues représentant l'échangeur gaz/air ;
- la figure 7 est une vue de côté ("en bout") de l'appareil, coupé par le plan brisé référencé VII-VII sur la figure 1 ;
- la figure 8 est une vue de détail (en coupe) montrant la manière dont le conduit d'amenée de gaz chaud est monté dans la paroi de fond de l'enveloppe;
- les figures 9, 10, et 11 sont des vues analogues, respectivement, à celles des figures 1, 2 et 7, représentant un second mode de réalisation d'un échangeur conforme à l'invention.

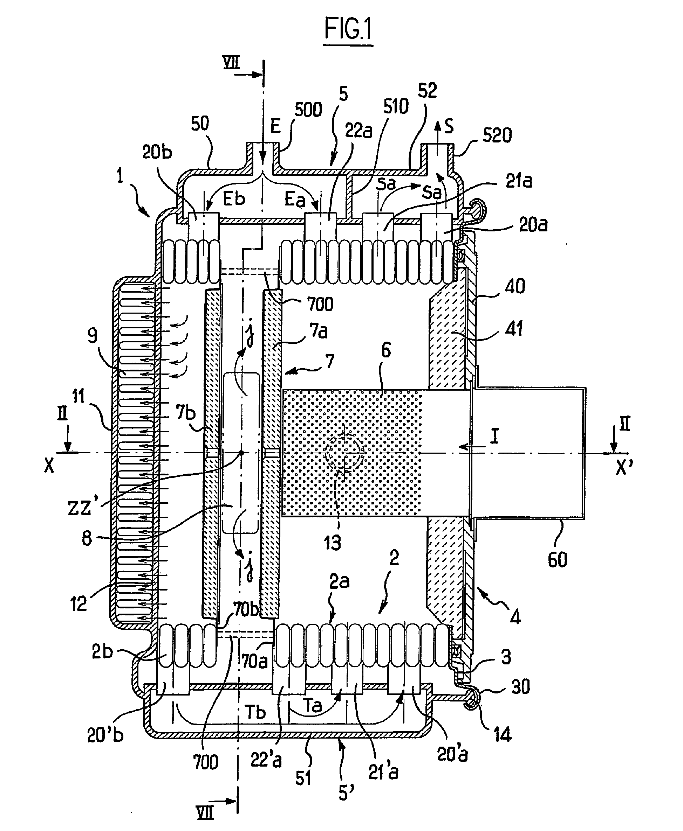

L'échangeur représenté sur les figures 1, 2 et 7 comporte une coque, ou enveloppe, 1 qui délimite une enceinte à l'intérieur de laquelle est monté fixement un double faisceau tubulaire 2, lequel consiste en deux faisceaux de tubes coaxiaux placés bout à bout, dont l'un (2a) fait office d'échangeur primaire et l'autre (2b) d'échangeur secondaire.

Cette enceinte affecte approximativement une forme générale cylindrique, d'axe horizontal **X-X'**.

Dans le mode de réalisation représenté, le faisceau 2a consiste en un groupe de trois tubes adjacents formant un enroulement hélicoïdal, d'axe **X-X'**.

L'autre faisceau 2b est constitué d'un tube unique, également enroulé en hélice, et d'axe **X-X'**.

Les trois tubes formant le faisceau 2a et le tube formant le faisceau 2b sont identiques, de même longueur et de même diamètre. Le faisceau 2a a donc une dimension axiale trois fois supérieure à celle du faisceau 2b.

Il s'agit de tubes de section droite aplatie dont les grands côtés sont perpendiculaires à l'axe **X-X'**.

Des bossages (non représentés) prévus sur les grandes faces des tubes jouent le rôle d'entretoises, permettant de délimiter entre chaque spire un interstice de valeur calibrée, sensiblement constante.

Cet enroulement est destiné à être traversé intérieurement par au moins un fluide à réchauffer, qui est par exemple de l'eau.

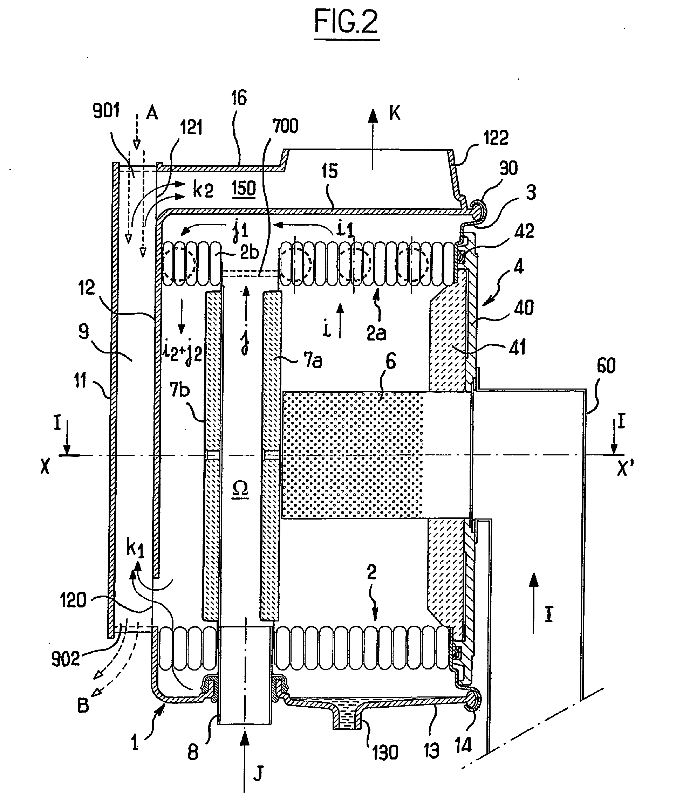

Dans le mode de réalisation illustré, les quatre éléments tubulaires hélicoïdaux sont branchés par paires en parallèle, et les deux paires sont branchées en série, le fluide à réchauffer étant un fluide unique qui circule de la gauche vers la droite si on considère les figures 1 et 2.

Des collecteurs latéraux 5-5', qui sont fixés à l'enveloppe 1, permettent le branchement de l'appareil, de manière classique, sur un conduit d'amenée du fluide froid qui doit être réchauffé, le transfert de ce fluide d'une paire de tubes à la suivante, et l'évacuation du fluide réchauffé.

Chaque élément tubulaire possède des portions d'extrémité droite, c'est-à-dire d'axe rectiligne, et de section progressivement variable, dont la partie d'extrémité débouchante 22, 22' est circulaire.

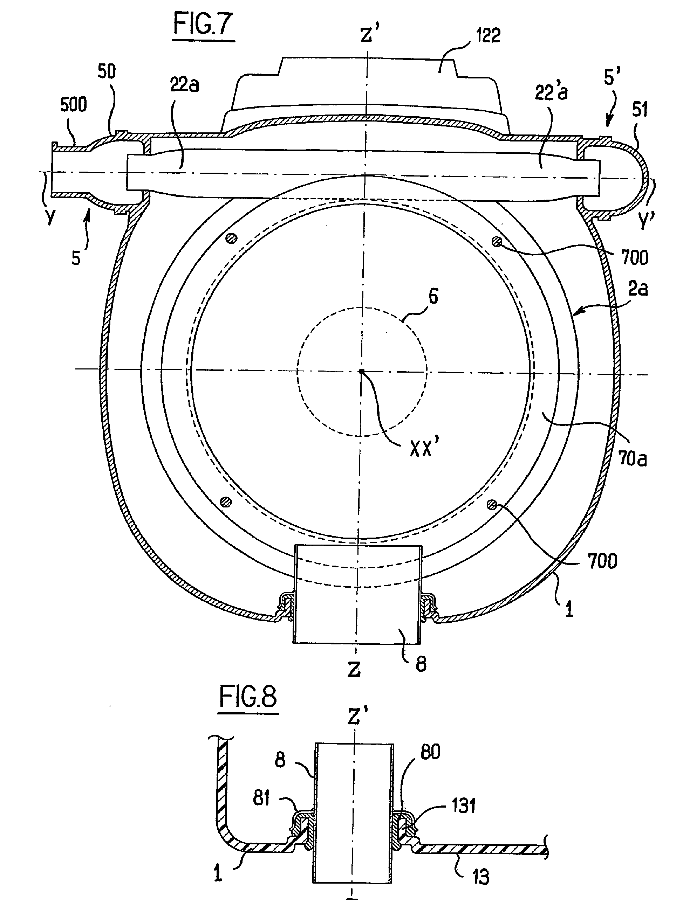

Dans l'exemple illustré, l'axe commun **Y-Y'** aux deux portions d'extrémité d'un enroulement tubulaire s'étendent dans un même plan horizontal, tangent à l'enroulement (voir figure 7), leurs embouchures étant dirigées à l'opposé l'une de l'autre, selon une disposition conforme à celle illustrée à la figure 24 du brevet européen 0 678 186 déjà cité.

Les embouchures d'entrée et de sortie des éléments tubulaires sont serties convenablement, et de manière étanche, dans des ouvertures ad hoc prévues dans l'enveloppe 1, pour déboucher à l'intérieur des collecteurs 5, 5'.

Le collecteur d'entrée-sortie 5 comprend deux chambres adjacentes séparées par une cloison interne 510, à savoir une chambre d'entrée 50 munie d'un embout 500 et une chambre de sortie 52 munie d'un embout 520.

Les embouts 500 et 520 sont destinés à être raccordés sur un tuyau d'amenée du fluide à réchauffer et, respectivement, un tuyau d'évacuation du fluide réchauffé.

La chambre 50 est connectée aux portions d'extrémité d'entrée 20b, 22a des deux éléments de faisceau 2b, 2a, dans lesquels rentre le fluide à réchauffer ; la chambre 52 est connectée aux portions d'extrémité de sortie 20a, 21a des deux éléments de faisceau 2a, par lesquels sort le fluide réchauffé.

Le collecteur opposé 5' possède une chambre de transfert unique 51, qui est raccordée à la fois aux portions d'extrémité de sortie 20'b, 22'a des deux éléments de faisceau 2b, 2a, dans lesquels rentre le fluide à réchauffer et aux portions d'extrémité d'entrée 20'a, 21'a des deux éléments de faisceau 2a, par lesquels sort le fluide réchauffé.

Sur la figure 1, des flèches symbolisent le parcours du fluide passant dans ces enroulements.

Le flux **E** entrant par l'embout 500 est subdivisé en deux flux **Eb** et **Ea** qui parcourent chacun un enroulement, se rejoignent dans la chambre 51 et sont transférés - flèches **Ta, Tb** - dans les deux autre enroulements pour déboucher - flèches **Sa, Sb**- dans la chambre 52 et en ressortir - flèche **S** - par l'embout 520.

Avantageusement, l'enveloppe 1 est en matière plastique.

Elle est par exemple fabriquée par roto-moulage ou par moulage par injection.

L'enveloppe est faite par exemple de deux demi coquilles qui sont thermo-soudées l'une à l'autre après que les faisceaux tubulaires aient été installés à l'intérieur de l'une d'elles.

L'enveloppe 1 est ouverte sur l'un de ses côtés, en l'occurrence du côté situé sur la droite, si on considère la vue de la figure 1.

En cours d'utilisation de l'appareil, une partie de la vapeur d'eau contenue dans les gaz brûlés se condense au contact des parois des tubes.

La référence 13 désigne la paroi de fond de l'enceinte ; de manière connue, ce fond est en pente, ce qui permet l'évacuation des condensats vers un orifice de sortie (bonde) 130.

La paroi arrière (du côté gauche sur les figures 1 et 2) de l'enveloppe est double; elle est formée d'une paroi principale verticale, qui porte la référence 12, et d'une portion de paroi externe 11, parallèle à la paroi 12, constituant le fond d'un renfoncement, ou cuvette, dans lequel est logé un échangeur de chaleur gaz/air 9.

La paroi supérieure 15 de l'enveloppe se raccorde, côté arrière, à la paroi principale 12.

Elle est surmontée par une cloison 16 qui se raccorde à la paroi externe 11.

Les parois 15 et 16 définissent un canal 150 qui relie la double paroi arrière 11-12 à une manchette d'évacuation 122 des gaz refroidis.

Bien entendu, l'orifice 130 est connecté à un conduit d'évacuation des condensats, tandis que la manchette 122 est branchée sur un conduit d'évacuation des fumées, par exemple un conduit de cheminée. Ces conduits ne sont pas représentés sur les figures.

Le côté droit (ouvert) de l'enveloppe est obturé par un élément de façade 3. Ce dernier est fixé sur toute sa périphérie par un rebord 30 qui est serti de manière hermétique aux gaz sur un bourrelet périphérique 14 bordant l'entrée de l'enveloppe.

Un joint d'étanchéité, par exemple en silicone (non représenté) peut avantageusement être prévu à ce niveau.

La plaque de façade 3, qui est par exemple en acier inoxydable, est normalement obturée par une porte amovible 4.

Dans le mode de réalisation représenté, la porte 4 est en deux parties ; elle est composée d'une plaque externe 40, en métal ou en matière plastique résistant à la chaleur, et d'une plaque interne 41- plus épaisse- en matériau isolant, par exemple à base de céramique. Un joint annulaire à lèvres 42 logé dans une gorge appropriée ménagée dans la plaque 40 permet d'appliquer cette dernière de manière étanche aux fumées contre la face externe de la façade 3.

Chacune des plaques 40, 41 présente, en partie centrale, une ouverture circulaire qui est traversée par un brûleur 6, par exemple un brûleur à gaz, qui est solidarisé à la porte 4 par des moyens non représentés.

Des moyens appropriés raccordés sur le brûleur 6 permettent d'amener à l'appareil, via un conduit 60, un mélange de combustible gaz et d'air, tel que propane et air notamment.

Ces moyens peuvent comprendre un ventilateur, non représenté, apte à insuffler le mélange gazeux dans le brûleur.

Le brûleur 6 est un tube cylindrique à extrémité fermée, dont la paroi est percée d'une multitude de petits trous qui permettent le passage du mélange combustible, radialement de l'intérieur vers l'extérieur du tube.

La surface extérieure de cette paroi constitue la surface de combustion.

Un système d'allumage de type connu, non représenté, comportant par exemple une électrode génératrice d'une étincelle, est bien évidement associé au brûleur.

Ce dernier est situé coaxialement au milieu de l'enroulement 2, mais il ne s'étend pas sur toute sa longueur. Il se situe seulement à l'intérieur du faisceau 2a.

Ce dispositif est pourvu d'un système déflecteur 7, interposé entre les deux faisceaux 2a-2b.

Ce système déflecteur 7 est composé d'une paire de plaques déflectrices constituées par des disques identiques 7a, 7b en matériau thermiquement isolant et réfractaire à la chaleur, par exemple à base de céramique ; ils sont supportés chacun par une armature discoïde en forme de plaque mince 70a, respectivement 70b, en acier inoxydable, de plus grand diamètre.

Le faisceau 2a est emprisonné axialement entre la porte 4 et le disque 7a, dont la plaque-support 70a est fixée contre sa dernière spire (côté intérieur, sur la gauche).

De façon similaire, le faisceau 2b est emprisonné axialement entre la paroi arrière 12 et le disque 7b, dont la plaque-support 70b est fixée contre sa dernière spire (du côté dirigé vers l'intérieur de l'enveloppe, sur la droite).

Des tiges longitudinales 700 formant entretoises, par exemple au nombre de quatre régulièrement réparties à 90 degrés d'angle (voir figure 7) assurent un maintien correct des deux plaques discoïdes 7a, 7b à une distance donnée l'une de l'autre.

Dans l'hypothèse où l'enveloppe est en matière plastique, des moyens de contention mécanique de chaque faisceau, du genre décrit dans la demande de brevet français N° 02 12848 précitée, sont prévus afin d'éviter que les efforts de dilatation axiale ne soit transmis à la paroi de l'enveloppe.

De plus, ces faisceaux sont entourés de préférence d'une virole formant écran thermique, pour éviter que l'enveloppe ne soit directement exposée aux gaz chauds, selon une disposition analogue à celle décrite dans la demande de brevet français N° 03 00775, également précitée.

Ni les moyens de contention mécanique, ni la virole, n'ont été représentés ici afin de ne pas alourdir inutilement les dessins et la présente description.

La paroi de fond 13 de l'enveloppe présente une ouverture traversée de manière étanche aux gaz par un conduit 8, en forme de manchon tubulaire, d'axe vertical **Z-Z'**.

Il s'agit de préférence d'un conduit métallique de section rectangulaire à angles arrondis (non vifs), dont la portion basse, qui ressort de l'enveloppe, est adaptée pour être connectée sur une tubulure (non représentée) d'amenée d'un gaz chaud. Sa partie haute débouche à l'intérieur de l'enveloppe, dans l'espace **Ω** situé entre les deux disques 7a, 7b.

Ladite tubulure d'amenée d'un gaz chaud est avantageusement équipée d'un clapet obturateur qui autorise ou interdit sélectivement le passage du gaz chaud.

Les grandes faces du conduit 8 sont disposées parallèlement aux plans de ces disques, perpendiculairement donc à l'axe **X-X'.** Son épaisseur, c'est-à-dire la dimension de ses petits côtés est juste légèrement inférieure à l'écartement mutuel des disques.

Comme cela est illustré sur la vue de détail de la figure 8, l'ouverture de paroi recevant le conduit 8 possède un rebord périphérique 131 en forme de manchon d'axe vertical **Z-Z'**, dirigé vers le haut, c'est-à-dire vers l'intérieur de l'enveloppe 1. Le conduit 8 est maintenu dans ce manchon par l'intermédiaire d'un joint isolant 80, par exemple en céramique, qui coiffe ledit rebord 131. Une bague emboutie 81 soudée à la périphérie du conduit 8 et clipsée sur le joint assure la fixation de l'ensemble.

Ce montage isole thermiquement le conduit métallique 8, dans lequel est susceptible de circuler un gaz à température élevée, de la paroi d'enveloppe en matière plastique.

De plus, la présence du rebord 131, dont l'extrémité haute se situe au-dessus du niveau des condensats susceptibles de se déposer au fond de l'enveloppe, évite tout risque de fuite de ces condensats dans cette zone.

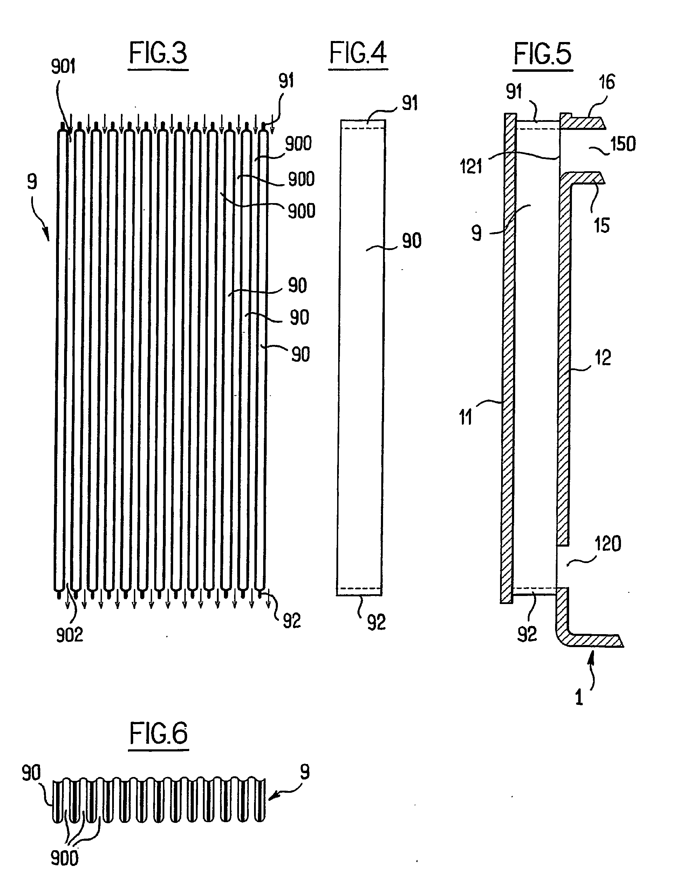

En nous référant maintenant aux figures 3 à 6, nous allons décrire la structure de l'échangeur récupérateur de chaleur gaz/air qui est installé dans la face arrière de l'appareil.

Comme déjà dit, la paroi arrière 12 de l'enveloppe 1 est verticale, et elle présente une double paroi 11-12 ; celle-ci délimite un compartiment vertical sensiblement plat, ouvert à ses extrémités haute et basse, et l'échangeur récupérateur de chaleur gaz/air 9 étant inséré dans ce compartiment.

Cet échangeur de chaleur est réalisé à partir d'une plaque de tôle en acier inoxydable repliée « en soufflet d'accordéon » (voir figures 3, 4 et 6). Il s'agit d'une tôle très mince ayant par exemple une épaisseur de l'ordre de 0,3 mm.

Les faces correspondant aux replis de ce soufflet forment des bandes planes verticales parallèles, perpendiculaires aux parois 11 et 12.

Elles sont pincées et soudées deux à deux à leurs extrémités haute 91 et basse 92. Chaque paire de bandes soudées constitue une tubulure plate 90, ouverte vers l'avant (vers la droite si on considère les figures 4 et 5) et fermée à ses extrémités haute et basse.

L'espace 900 compris entre deux paires de bandes soudées, au contraire, est ouvert à la fois vers l'arrière (vers la gauche si on considère les figures 4 et 5) et à ses extrémités haute et basse.

Dans l'exemple illustré, l'échangeur 9 comporte une série de treize tubulures plates 90 alternées avec une série de douze espaces 900. Ces derniers ont la même largeur que les tubulures 90.

Cette structure en soufflet a une configuration en forme générale de boîtier plat rectangulaire, qui est emboîtable de haut en bas dans le compartiment délimité par les deux parois 11 et 12, dont la section est complémentaire de celle de ce boîtier..

Ce compartiment est ouvert à ses extrémités haute et basse.

La paroi interne 12 présente une paire de fenêtres (ouvertures rectangulaires) basse 120, et haute 121 ; cette dernière se situe au dessus de la portion de paroi supérieure 15, formant l'embouchure du canal 150 d'évacuation des gaz.

Ces ouvertures viennent en regard des portions inférieure et supérieure de la structure d'échangeur 9 lorsque celui-ci est inséré dans la paroi arrière 11-12. Elles s'étendent sur toute la largeur de cette structure.

Ainsi, chacune des tubulures 90 est fermée à ses extrémités haute et basse par les zones pincées et soudées 91, 92, à l'arrière par un pli du soufflet, et est obturée vers l'avant, sur la majeure partie de sa hauteur, par la paroi 12.

Elle débouche cependant à ses parties basse et haute, respectivement, via la fenêtre 120 à l'intérieur de l'appareil et, via la fenêtre 121 à l'intérieur du canal 150 qui conduit à la manchette 122.

Chacun des espaces 900 situé entre ces tubulures est ouvert à ses extrémités haute et basse, est fermé à l'avant par un pli du soufflet, et est obturé à l'arrière par la paroi 11. Il constitue donc une sorte de cheminée qui débouche vers le haut et le bas uniquement.

Des moyens appropriés non représentés assurent le maintien et la bonne étanchéité de la structure d'échangeur 9 dans son logement, entre les deux parois 11 et 12.

En référence notamment aux figures 1 et 2, nous allons maintenant expliquer le fonctionnement de cet appareil.

On considérera tout d'abord que la tubulure d'amenée d'un gaz chaud dans le conduit 8 est fermée.

Le fluide à réchauffer, de l'eau froide par exemple, a été mis en circulation ; un mélange gazeux combustible, symbolisé par la flèche **I**, est amené au brûleur 6 par le conduit 60.

Le brûleur 6 ayant été allumé, les gaz chauds générés par ce dernier traversent tout d'abord la première partie 2a du faisceau 2 (située sur la droite de la plaque déflectrice 7a), en passant entre les interstices des tubes radialement, de l'intérieur vers l'extérieur (flèches **i**) ; ils ne peuvent pas s'échapper axialement en raison de la présence du disque déflecteur 7a.

Grâce à la présence de la partie supérieure de la paroi de l'enveloppe, ils ne peuvent pas s'échapper non plus immédiatement par la manchette 122.

Ils sont canalisés vers la gauche(flèche **i₁**), et obligés de traverser la partie arrière 2b de l'échangeur, au-delà de l'autre plaque déflectrice 7b, cette fois de l'extérieur vers l'intérieur (flèche **i₂**), réalisant un préchauffage de l'eau qui circule dans le faisceau tubulaire.

Leur seule issue est alors la fenêtre 120, qu'ils traversent (flèches **k₁**).

A ce stade, leur température a été sensiblement abaissée, par suite du transfert thermique intervenu entre les gaz chauds et le fluide parcourant les faisceaux 2a et 2b.

Grâce à la présence de l'échangeur récupérateur gaz/air 9, cette température va cependant pouvoir être encore abaissée.

Les gaz qui traversent la fenêtre 120 sont canalisés dans les tubulures 90, qu'ils parcourent de bas en haut, pour en ressortir par la fenêtre supérieure 121(flèches **k₂**). et enfin être évacués via le canal 150 et la manchette de sortie 122. (flèche **K**).

Un dispositif approprié (non représenté), tel qu'un ventilateur par exemple, permet d'amener de l'air frais en partie haute 901 de l'échangeur 9 et de le forcer à pénétrer dans les espaces tubulaires 900 (flèches **A**), et à les parcourir du haut vers le bas. Il s'opère ainsi un échange thermique avec les gaz encore chauds qui remontent dans les tubulures adjacentes 90.

Cet air réchauffé ressort à l'extrémité basse 902 des espaces tubulaires 900 (flèches **B**).

Avantageusement, il est récupéré et canalisé par des moyens appropriés (non représenté) de manière à alimenter le brûleur après avoir été mélangé au gaz carburant ; le rendement global de l'appareil se trouve ainsi sensiblement amélioré, et la combustion est meilleure.

Le refroidissement complémentaire réalisé par l'échangeur gaz/air permet en outre de réduire les nuisances visibles liées à l'échappement des gaz brûlés hors de la manchette, à l'extérieur du bâtiment. Les panaches blancs résultant d'une trop grande différence de température entre ces gaz et l'air extérieur sont notablement réduits, voire supprimés.

Selon une caractéristique importante de la présente invention, il est possible d'alimenter l'échangeur, non seulement par le gaz chaud issu du brûleur, mais aussi par un autre gaz chaud, dit additionnel, qui est introduit alors à l'intérieur de l'enveloppe via le conduit 8, dont le clapet a bien entendu été préalablement ouvert.

Cette alimentation supplémentaire peut se faire optionnellement, et selon les circonstances, soit en même temps que celle réalisée par l'alimentation principale provenant du brûleur, soit de manière autonome (brûleur éteint).

Dans le premier cas le gaz additionnel participe au chauffage du fluide parcourant les faisceaux tubulaires 2 et de l'air passant dans l'échangeur 9.

Dans le second cas, il assure seul ce double chauffage.

Le gaz chaud additionnel introduit dans l'appareil (flèche **J**) arrive dans l'espace **Ω** et s'échappe radialement d'entre les disques 7a, 7b (flèches **j**).

Il est ensuite canalisé vers l'arrière de l'enceinte de l'échangeur (flèche **j₁**), et forcé à pénétrer dans l'échangeur secondaire, radialement de l'extérieur vers l'intérieur (flèche **j₂**), assurant ainsi le chauffage du fluide qui passe dans l'enroulement 2b, ou lui apportant un complément de chauffage.

Enfin, il traverse l'échangeur gaz/air et ressort de l'appareil par la manchette 122.

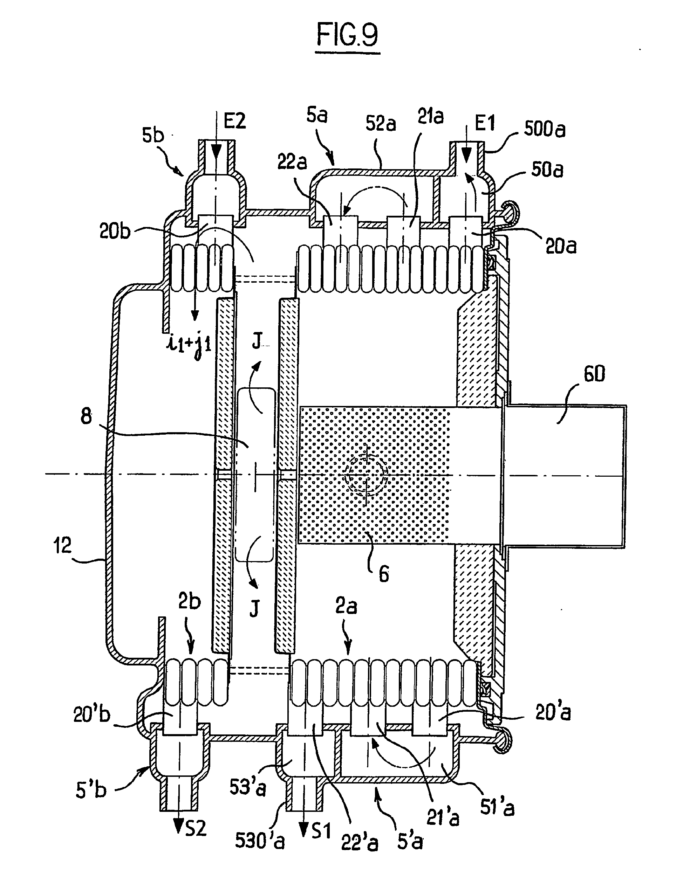

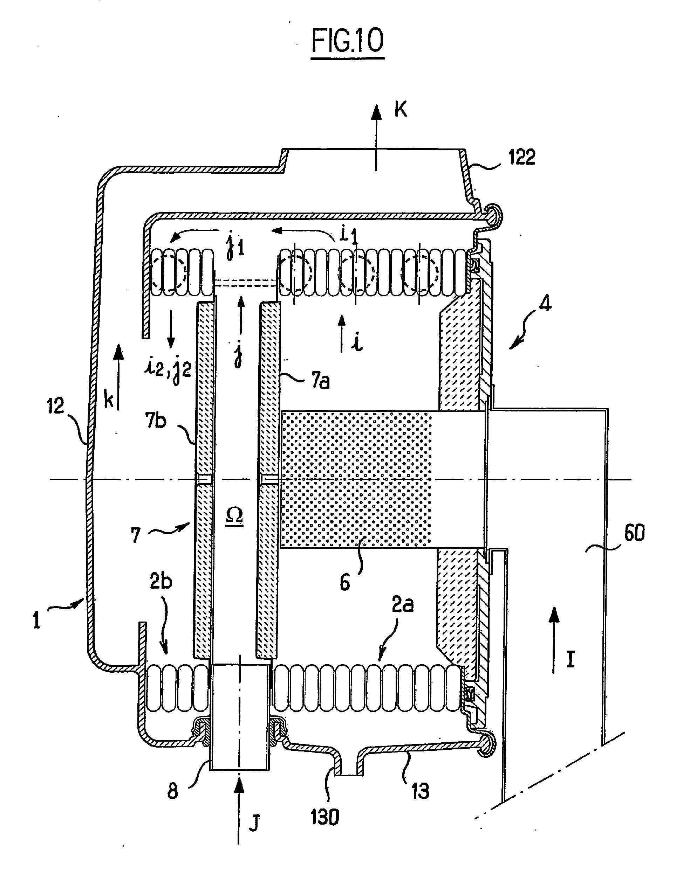

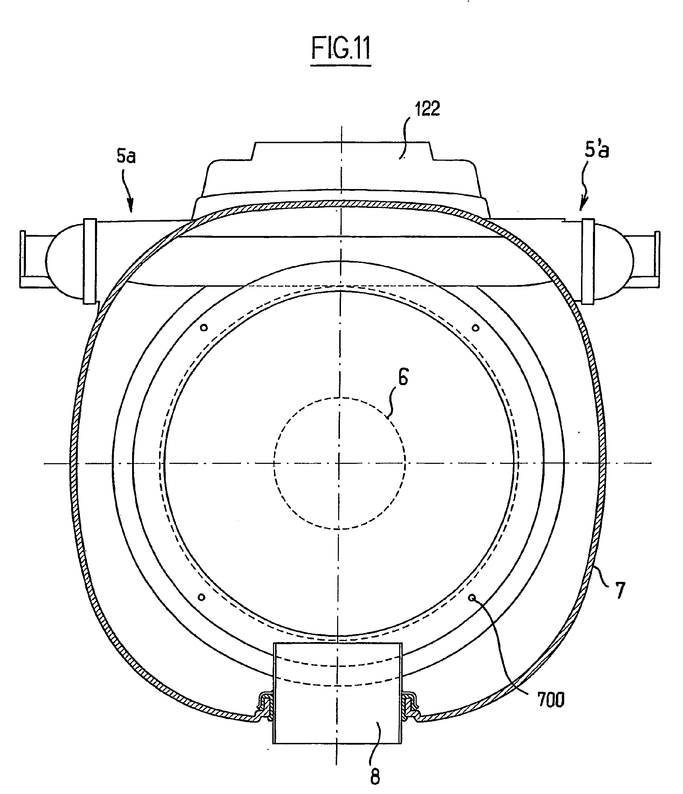

Dans le second mode de réalisation de l'invention qui est illustré sur les figures 9 à 11, on retrouve une configuration globalement analogue à celle qui vient d'être décrite, à l'exception que l'appareil est dépourvu d'un échangeur gaz/air.

Les éléments identiques ou similaires à ceux du premier mode de réalisation ont été affectés des mêmes chiffres de référence, et ne sera pas donné à nouveau une explication quant à leur nature et à leur fonction.

Cet échangeur se distingue essentiellement du précédent par le fait qu'il est capable d'assurer le chauffage de deux fluides distincts, l'un circulant à l'intérieur du faisceau 2a qui fait office d'échangeur primaire, et l'autre à l'intérieur du faisceau 2b qui fait office d'échangeur secondaire.

Le faisceau 2a est composé de trois éléments adjacents montés en série.

Le premier fluide rentre d'un côté par un collecteur d'entrée 5a (flèche **E₁**) et ressort de l'autre par un collecteur de sortie 5'a (flèche **E₂**).

Le collecteur 5a est subdivisé en deux chambres 50a et 52a.

Le collecteur 5'a est subdivisé en deux chambres 51'a et 53'a.

Ledit fluide entre dans la chambre 50a par un embout 500a et entre dans le premier élément du faisceau 2a via sa portion d'extrémité 20a; il en ressort par la portion d'extrémité opposée 20'a et débouche dans la chambre 51'a.

Le parcours se poursuit de manière similaire dans les deux éléments suivants, et le fluide ressort, réchauffé, du faisceau 2a par l'embout 530'a.

Le second fluide pénètre dans l'élément constitutif du faisceau secondaire 2b par un collecteur d'entrée à chambre unique 5a et en ressort, réchauffé, par un collecteur de sortie, également à chambre unique, 5'b.

Grâce à cette disposition, le premier fluide reçoit la chaleur des gaz chauds issus du brûleurs et traversant le faisceau 2a de l'intérieur vers l'extérieur.

Le second fluide reçoit la chaleur des gaz chauds issus du brûleurs et ayant déjà traversé le faisceau 2a de l'intérieur vers l'extérieur, lorsqu'ils traversent le faisceau 2b, cette fois de l'extérieur vers l'intérieur, et/ou la chaleur du gaz chaud additionnel provenant du conduit 8..

Il va de soi que ce second mode de réalisation de l'échangeur pourrait être pourvu, comme le premier, d'un échangeur récupérateur de chaleur gaz/air.

Le gaz chaud principal n'est pas nécessairement généré par un brûleur logé dans le faisceau primaire. Il peut provenir, comme le gaz chaud additionnel, d'une source extérieure et être acheminé à l'intérieur du faisceau primaire au moyen d'un conduit raccordé axialement sur la porte 4.

Comme application possible de l'échangeur faisant l'objet de l'invention, on peut mentionner les chaudières à double production d'énergie, à savoir de l'électricité et de la chaleur. La chaleur est destinée par exemple au chauffage de locaux et de l'eau sanitaire.

C'est cette chaleur qui est véhiculée par le gaz chaud principal.

L'électricité est en général produite par un alternateur entraîné par un petit moteur thermique. Ce moteur peut être du type à piston ou turbine, ou du type "STIRLING" à combustion externe.

Les gaz chauds issus de l'échappement de ces moteurs se trouvent à haute température, comprise -à titre indicatif- entre 400 et 650°C.

Ils contiennent donc une énergie importante, qu'il est intéressant de récupérer pour améliorer le rendement de l'installation.

Ce sont ces gaz qui font office de "gaz additionnel" alimentant l'appareil via le conduit 8.

Dans la solution à deux fluides distincts, qui fait l'objet du second mode de réalisation, le premier fluide est par exemple destiné à alimenter un circuit de chauffage central et le second à chauffer de l'eau sanitaire.

D'autres applications, par exemple dans le domaine des piles à combustible, nécessitent l'emploi de fluides de nature différente alors que l'émission d'énergie se fait simultanément. L'invention se prête bien à de telles applications.

Il va de soi qu'il est possible, sans sortir du cadre de l'invention, de prévoir des faisceaux ainsi conçus et connectés qu'ils permettent de réchauffer plus de deux liquides.

Les dimensions de l'appareil, régies notamment par la section, le diamètre, et la longueur des faisceaux tubulaires, ainsi que -le cas échéant- par le type de brûleur mis en oeuvre seront adaptées bien sûr à la puissance recherchée et aux conditions d'utilisation.

L'appareil est avantageusement équipé d'une sonde de température adaptée pour arrêter l'admission des gaz chauds lorsque la sonde détecte une température excessive prédéterminée.

Pour qu'un tel échangeur puisse fonctionner correctement, il est essentiel que l'espace **Ω** dans lequel arrive le gaz chaud additionnel soit très bien isolé thermiquement à la fois de l'espace intérieur au faisceau primaire 2a et de l'espace intérieur au faisceau secondaire 2b, car les niveaux de température qui y règnent sont très différents; ce résultat est obtenu grâce au fait que chacune des plaques déflectrices 7a et 7b est en matériau thermiquement isolant et, de préférence réfractaire à la chaleur.

## Revendications

1. Echangeur de chaleur à condensation, qui comprend deux faisceaux de tubes coaxiaux (2a, 2b) dont l'un fait office d'échangeur primaire et l'autre d'échangeur secondaire, chacun de ces faisceaux consistant en un tube, ou en un groupe de tubes disposés bout à bout, formant un enroulement en hélice, dans lequel la paroi du (des) tube(s) est réalisée dans un matériau thermiquement bon conducteur et présente une section droite aplatie et ovale, dont le grand axe est perpendiculaire, ou approximativement perpendiculaire, à celui (**X-X'**) de l'hélice, tandis que la largeur de l'interstice séparant deux spires adjacentes est constante et notablement plus faible que l'épaisseur de ladite section droite, ces faisceaux (2a, 2b) étant montés fixement à l'intérieur d'une enveloppe (1) imperméable aux gaz, des moyens étant prévus pour faire circuler au moins un fluide à réchauffer, tel que de l'eau froide, à l'intérieur du(des) tube(s) constitutif(s) desdits faisceaux (2a, 2b), cette enveloppe (1) présentant une manchette (122) d'évacuation des gaz, l'échangeur étant ainsi agencé qu'un premier gaz chaud -dit principal- est admis à l'intérieur de ladite enveloppe (1) et y est canalisé de telle sorte qu'il traverse radialement, ou approximativement radialement, lesdits faisceaux en passant à travers les interstices séparant ses spires, un système déflecteur (7) étant en outre intercalé entre ces deux faisceaux, et ainsi agencé, que ce gaz chaud principal traverse d'abord l'échangeur primaire (2a), en passant entre les interstices séparant ses spires de l'intérieur vers l'extérieur, puis traverse l'échangeur secondaire (2b), en passant entre les interstices séparant ses spires de l'extérieur vers l'intérieur, après quoi il est évacué à l'extérieur via ladite manchette (122), **caractérisé par le fait que**, d'une part, ledit système déflecteur (7) est composé de deux plaques (7a, 7b), dites plaques déflectrices, réalisées dans un matériau thermiquement isolant, et que, d'autre part, il comporte des moyens pour introduire un second gaz chaud - dit additionnel - à l'intérieur de ladite enveloppe (1) entre les deux plaques déflectrices thermiquement isolantes (7a, 7b), et pour le canaliser, de telle sorte qu'il traverse directement radialement, ou approximativement radialement l'échangeur secondaire (2b), en passant entre les interstices séparant ses spires de l'extérieur vers l'intérieur, soit seul, soit en même temps que le gaz chaud principal qui a déjà traversé les spires du faisceau de tubes (2a) faisant office d'échangeur primaire, après quoi il est évacué vers l'extérieur via ladite manchette (122).

2. Echangeur de chaleur à condensation, associé à un brûleur à gaz ou à fioul (6), qui comprend deux faisceaux de tubes coaxiaux (2a, 2b) placés bout à bout, dont l'un fait office d'échangeur primaire et l'autre d'échangeur secondaire, chacun de ces faisceaux consistant en un tube, ou en un groupe de tubes disposés bout à bout, formant un enroulement en hélice, dans lequel la paroi du (des) tube(s) est réalisée dans un matériau thermiquement bon conducteur et présente une section droite aplatie et ovale, dont le grand axe est perpendiculaire, ou approximativement perpendiculaire, à celui (**X-X'**) de l'hélice, tandis que la largeur de l'interstice séparant deux spires adjacentes est constante et notablement plus faible que l'épaisseur de ladite section droite, ces faisceaux (2a, 2b) étant montés fixement à l'intérieur d'une enveloppe (1) imperméable aux gaz, des moyens étant prévus pour faire circuler au moins un fluide à réchauffer, en particulier de l'eau froide, à l'intérieur du(des) tube(s) constitutif(s) desdits faisceaux (2a, 2b), cette enveloppe (1) présentant une manchette (122) d'évacuation des gaz brûlés, l'échangeur étant ainsi agencé que les gaz chauds générés par le brûleur (6) traversent radialement, ou approximativement radialement, lesdits faisceaux en passant à travers les interstices séparant ses spires, un système déflecteur (7) étant en outre intercalé entre ces deux faisceaux, et ainsi agencé, que les gaz chauds générés par le brûleur traversent d'abord l'échangeur primaire (2a), en traversant les interstices séparant ses spires de l'intérieur vers l'extérieur, puis l'échangeur secondaire (2b), en traversant les interstices séparant ses spires de l'extérieur vers l'intérieur, après quoi ils sont évacués à l'extérieur via ladite manchette (122), **caractérisé par le fait que**, d'une part, ledit système déflecteur (7) est composé de deux plaques (7a, 7b), dites plaques déflectrices, réalisées dans un matériau thermiquement isolant et réfractaire à la chaleur, par exemple à base de céramique, centrées sur ledit axe d'hélice (**X-X'**), disposées parallèlement côte à côte, avec un certain espacement, et dont l'une (7a) ferme un côté du faisceau de tubes (2a) qui fait office d'échangeur primaire, tandis que l'autre ferme le côté adjacent du faisceau de tubes (2b) qui fait office d'échangeur secondaire, et que, d'autre part, la paroi de l'enveloppe (1) est traversée par un conduit (8) adapté pour amener un gaz chaud additionnel de l'extérieur à l'intérieur de l'enveloppe (1), dans l'espace (**Ω**) compris entre ces deux plaques (7a, 7b), de telle sorte que ce gaz chaud peut traverser les interstices séparant les spires du faisceau de tubes (2b) faisant office d'échangeur secondaire, de l'extérieur vers l'intérieur, soit seul, soit en même temps que les gaz chauds générés par le brûleur et qui ont déjà traversé les spires du faisceau de tubes (2a) faisant office d'échangeur primaire, après quoi ils sont évacués vers l'extérieur via ladite manchette (122).

3. Echangeur de chaleur selon la revendication 1 ou 2, **caractérisé par le fait que** lesdites plaques déflectrices (7a, 7b) sont des disques fixés chacun, coaxialement, à l'extrémité d'un faisceau (2a, respectivement 2b), de manière à en obturer l'espace intérieur, de manière étanche aux gaz.

4. Echangeur de chaleur selon l'une des revendications 1 à 3, **caractérisé par le fait que** lesdites plaques déflectrices (7a, 7b) sont reliées l'une à l'autre par des entretoises (700).

5. Echangeur de chaleur selon l'une des revendication 1 à 4, **caractérisé par le fait que** l'espace intérieur du faisceau de tubes (2a) qui fait office d'échangeur primaire est obturé, à une extrémité, par l'une (7a) desdites plaques déflectrices et, à son autre extrémité, par une porte (4) fixée sur la façade de l'échangeur, cette porte étant traversée par le brûleur (6), et solidaire de celui-ci.

6. Echangeur de chaleur selon l'une des revendication 1 à 5, **caractérisé par le fait que** l'espace intérieur du faisceau de tubes (2b) qui fait office d'échangeur secondaire est obturé, à une extrémité, par l'une (7b) desdites plaques déflectrices et, à son autre extrémité, par la paroi arrière (12) de ladite enveloppe (1).

7. Echangeur de chaleur selon l'une des revendication 1 à 6, dont l'enveloppe est réalisée en matière plastique, tandis que le conduit (8) adapté pour amener un gaz chaud de l'extérieur de l'échangeur à l'intérieur de l'enveloppe (1), dans l'espace compris entre ces deux plaques (7a, 7b), est en métal, **caractérisé par le fait que** la paroi de fond (13) de ladite enveloppe (1) présente une ouverture pour le passage et la retenue dudit conduit métallique (8), et que cette ouverture possède un rebord (131) rentrant à l'intérieur de l'enveloppe (1), ce conduit (8) étant fixé audit rebord (131) par l'intermédiaire d'un joint périphérique (80) en matière thermiquement isolante, par exemple en céramique.

8. Echangeur de chaleur selon l'une des revendication 1 à 7, **caractérisé par le fait que** ledit conduit (8) a une section droite sensiblement rectangulaire, dont les grands côtés s'étendent parallèlement aux plans desdites plaques déflectrices (7a, 7b).

9. Echangeur de chaleur à condensation selon l'une des revendications 1 à 8, **caractérisé par le fait que** le faisceau de tubes (2a) qui fait office d'échangeur primaire possède une longueur axiale sensiblement plus grande que celle du faisceau de tubes (2b) qui fait office d'échangeur secondaire.

10. Echangeur de chaleur selon l'une des revendications 1 à 9, **caractérisé par le fait qu'**il est adapté pour permettre la circulation et le réchauffage d'un seul fluide en particulier de l'eau froide, à l'intérieur du(des) tube(s) constitutif(s) desdits faisceaux (2a, 2b).

11. Echangeur de chaleur selon l'une des revendications 1 à 9, **caractérisé par le fait qu'**il est adapté pour permettre la circulation et le réchauffage d'au moins deux fluides différents qui circulent séparément à l'intérieur des tubes constitutifs desdits faisceaux (2a, 2b).

12. Echangeur de chaleur selon la revendication 11, **caractérisé par le fait qu'**il est adapté pour permettre la circulation et le réchauffage de deux fluides différents qui circulent séparément, l'un à l'intérieur du ou des tube(s) constitutif(s) du faisceau (2a) qui fait office d'échangeur primaire, l'autre à l'intérieur du ou des tube(s) constitutif(s) du faisceau (2b) qui fait office d'échangeur secondaire.

## Claims

1. A condensation heat exchanger, which comprises two coaxial tube bundles (2a, 2b), one of which acts as primary exchanger and the other of which acts as secondary exchanger, each of these bundles consisting of a tube or of a group of tubes arranged end-to-end, forming a helical coil, in which the wall of the tube(s) is produced from a material that is a good conductor of heat and has a flattened, oval cross section, the major axis of which is perpendicular or approximately perpendicular to the axis (X-X') of the helix, while the width of the gap separating two adjacent turns is constant and noticeably smaller than the thickness of said cross section, said bundles (2a, 2b) being mounted securely inside a gas-impermeable jacket (1), means being provided in order to circulate at least one fluid to be heated, such as cold water, inside the tube(s) forming said bundles (2a, 2b), said jacket (1) having a gas-evacuation sleeve (122), the exchanger being arranged in such a way that a first hot gas - called principal hot gas - is let into said jacket (1) and channeled therein in such a manner that it flows radially, or approximately radially, through said bundles, passing through the gaps separating its turns, a deflection system (7) also being interposed between these two bundles and arranged in such a manner that this principal hot gas first flows through the primary exchanger (2a), passing between the gaps separating its turns from the inside to the outside, then flows through the secondary exchanger (2b), passing between the gaps separating its turns from the outside to the inside, after which it is evacuated to the outside via said sleeve (122), **characterized in that**, on the one hand, said deflection system (7) is composed of two plates (7a, 7b) called deflection plates, produced from a thermally insulating material, and **in that**, on the other hand, it includes means for introducing a second hot gas - called additional hot gas - inside said jacket (1) between the two thermally insulating deflection plates (7a, 7b) and to channel it such that it flows directly, radially or approximately radially, through the secondary exchanger (2b), passing between the gaps separating its turns from the outside to the inside, either alone or at the same time as the principal hot gas that has already flown through the turns of the tube bundle (2a) acting as primary exchanger, after which it is evacuated to the outside via said sleeve (122).

2. A condensation heat exchanger, associated with a gas or fuel-oil burner (6), which comprises two coaxial tube bundles (2a, 2b) placed end-to-end, one of which acts as primary exchanger and the other of which acts as secondary exchanger, each of these bundles consisting of a tube or of a group of tubes arranged end-to-end, forming a helical coil, in which the wall of the tube(s) is produced from a material that is a good conductor of heat and has a flattened, oval cross section, the major axis of which is perpendicular or approximately perpendicular to the axis (X-X¹) of the helix, while the width of the gap separating two adjacent turns is constant and noticeably smaller than the thickness of said cross section, said bundles (2a, 2b) being mounted securely inside inside a gas-impermeable jacket (1), means being provided in order to circulate at least one fluid to be heated, in particular cold water, inside the tube(s) forming said bundles (2a, 2b), said jacket (1) having a burnt-gas-evacuation sleeve (122), the exchanger being arranged such that the hot gases generated by the burner (6) flow radially, or approximately radially, through said bundles, passing through the gaps separating its turns, a deflection system (7) also being interposed between these two bundles and arranged in such a manner that the hot gases generated by the burner first flow through the primary exchanger (2a), flowing through the gaps separating its turns from the inside to the outside, then the secondary exchanger (2b), flowing through the gaps separating its turns from the outside to the inside, after which they are evacuated to the outside via said sleeve (122), **characterized in that**, on the one hand, said deflection system (7) is composed of two plates (7a, 7b), called deflection plates, produced from a heat-refractory, thermally insulating material, for example based on ceramics, centered on said axis of the helix (X-X¹), arranged in parallel, side-by-side, with a certain spacing, and one (7a) of which closes one side of the tube bundle (2a) acting as primary exchanger, while the other closes the adjacent side of the tube bundle (2b) acting as secondary exchanger, and **in that**, on the other hand, the wall of the jacket (1) is penetrated by a line (8) fitted to convey an additional hot gas from the outside to the inside of the jacket (1), into the space (Ω) between these two plates (7a, 7b) such that this hot gas can flow through the gaps separating the turns of the tube bundle (2b) acting as secondary exchanger from the outside to the inside, either alone or at the same time as the hot gases generated by the burner that have already flowed through the turns of the tube bundle (2a) acting as primary exchanger, after which they are evacuated toward the outside via said sleeve (122).

3. The heat exchanger as claimed in claim 1 or 2, **characterized in that** said deflection plates (7a, 7b) are disks each fixed coaxially to the end of a bundle (2a, 2b, respectively) so as to block off the inner space thereof in a gastight manner.

4. The heat exchanger as claimed in one of claims 1 to 3, **characterized in that** said deflection plates (7a, 7b) are connected together by spacers (700).

5. The heat exchanger as claimed in one of claims 1 to 4, **characterized in that** the inner space of the tube bundle (2a) acting as primary exchanger is blocked off at one end by one (7a) of said deflection plates and, at its other end, by a door (4) fixed to the façade of the exchanger, this door being penetrated by the burner (6) and integral with the latter.

6. The heat exchanger as claimed in one of claims 1 to 5, **characterized in that** the inner space of the tube bundle (2b) acting as secondary exchanger is blocked off at one end by one (7b) of said deflection plates and, at its other end, by the rear wall (12) of said jacket (1).

7. The heat exchanger as claimed in one of claims to 6, the jacket of which is made from plastic while the line (8) fitted in order to convey a hot gas from the outside of the exchanger to the inside of the jacket (1), in the space between these two plates (7a, 7b), is made from metal, **characterized in that** the end wall (13) of said jacket (1) has an opening for the passage and for holding said metal (8), and **in that** this opening has a rim (131) turned toward the inside of the jacket (1), this line (8) being fixed to said rim (131) by means of a peripheral seal (80) made from thermally insulating material, for example from ceramics.

8. The heat exchanger as claimed in one of claims 1 to 7, **characterized in that** said line (8) has a substantially rectangular cross section, the large sides of which extend parallel to the planes of said deflection plates (7a, 7b).

9. The condensation heat exchanger as claimed in one of claims 1 to 8, **characterized in that** the tube bundle (2a) acting as primary exchanger has an axial length substantially greater than that of the tube bundle (2b) acting as secondary exchanger.

10. The heat exchanger as claimed in one of claims 1 to 9, **characterized in that** it is fitted in order to allow the circulation and heating of a single fluid, in particular cold water, inside the tube(s) forming said bundles (2a, 2b).

11. The heat exchanger as claimed in one of claims 1 to 9, **characterized in that** it is fitted in order to allow the circulation and heating of at least two different fluids circulating separately inside the tubes forming said bundles (2a, 2b).

12. The heat exchanger as claimed in claim 11, **characterized in that** it is fitted in order to allow the circulation and heating of two different fluids circulating separately, one inside the tube(s) forming the bundle (2a) acting as primary exchanger, the other inside the tube(s) forming the bundle (2b) acting as secondary exchanger.

## Patentansprüche

1. Kondensationswärmetauscher, der zwei koaxiale Röhrenbündel (2a, 2b) umfaßt, von denen das eine als primärer Wärmetauscher und das andere als sekundärer Wärmetauscher dient, wobei jedes dieser Bündel aus einer Röhre oder aus einem Satz von aneinandergefügten Röhren besteht, die eine schraubenförmige Aufwicklung bilden, bei der die Wand der einen oder mehreren Röhre(n) aus einem gut wärmeleitenden Material realisiert ist und einen abgeflachten und ovalen Querschnitt hat, dessen große Achse senkrecht oder in etwa senkrecht zu derjenigen (X-X') der Schraube ist, wobei die Breite der Lücke, die zwei benachbarte Windungen trennt, konstant und deutlich kleiner ist als die Dicke des Querschnitts, wobei diese Bündel (2a, 2b) im Inneren eines gasundurchlässigen Mantels (1) fest angebracht sind und wobei Mittel vorgesehen sind, um wenigstens ein aufzuwärmendes Fluid, wie etwa kaltes Wasser, in der einen oder den mehreren Röhren, die die Bündel (2a, 2b) bilden, zirkulieren zu lassen, wobei dieser Mantel (1) eine Manschette (122) zum Abführen von Gasen hat, wobei der Wärmetauscher derart eingerichtet ist, daß ein erstes warmes Gas - das Hauptgas genannt wird - dem Inneren des Mantels (1) zugeführt wird und dort so geführt wird, daß es die Bündel radial oder fast radial durchläuft, wobei es durch die Lücken strömt, die die Windungen trennen, wobei außerdem zwischen diesen beiden Bündeln ein Ablenksystem (7) eingefügt und so ausgeführt ist, daß dieses warme Hauptgas zuerst den primären Wärmetauscher (2a) durchströmt, wobei es von innen nach außen durch die Lücken, die dessen Windungen trennen, strömt, und dann den sekundären Wärmetauscher (2b) durchströmt, wobei es von außen nach innen durch die Lücken, die dessen Windungen trennen, strömt, wonach es durch die Manschette (122) nach außen abgeführt wird, **dadurch gekennzeichnet, daß** zum einen das Ablenksystem (7) aus zwei Platten (7a, 7b) zusammengesetzt ist, die Ablenkplatten genannt werden und die aus einem wärmeisolierenden Material realisiert sind, und daß er zum anderen Mittel umfaßt, um ein zweites warmes Gasdas zusätzliches Gas genannt wird - in das Innere des Mantels (1) zwischen die beiden wärmeisolierenden Ablenkplatten (7a, 7b) zuzuführen und um dieses so zu führen, daß es den sekundären Wärmetauscher (2b) direkt radial oder fast radial durchströmt, wobei es von außen nach innen durch die Lücken, die dessen Windungen trennen, strömt, und dies einzeln oder gleichzeitig mit dem warmen Hauptgas, das bereits die Windungen des Röhrenbündels (2a), das als primärer Wärmetauscher dient, durchströmt hat, wonach es durch die Manschette (122) nach außen abgeführt wird.

2. Kondensationswärmetauscher, der mit einem Brenner für Gas oder Heizöl (6) verbunden ist und der zwei aneinandergefügte koaxiale Röhrenbündel (2a, 2b) umfaßt, von denen das eine als primärer Wärmetauscher und das andere als sekundärer Wärmetauscher dient, wobei jedes dieser Bündel aus einer Röhre oder aus einem Satz von aneinandergefügten Röhren besteht, die eine schraubenförmige Aufwicklung bilden, bei der die Wand der einen oder mehreren Röhre(n) aus einem gut wärmeleitenden Material realisiert ist und einen abgeflachten und ovalen Querschnitt hat, dessen große Achse senkrecht oder in etwa senkrecht zu derjenigen (X-X') der Schraube ist, wobei die Breite der Lücke, die zwei benachbarte Windungen trennt, konstant und deutlich kleiner als die Dicke des Querschnitts ist, wobei diese Bündel (2a, 2b) im Inneren eines gasundurchlässigen Mantels (1) fest angebracht sind und wobei Mittel vorgesehen sind, um wenigstens ein aufzuwärmendes Fluid, insbesondere kaltes Wasser, in der einen oder den mehreren Röhren, die die Bündel (2a, 2b) bilden, zirkulieren zu lassen, wobei dieser Mantel (1) eine Manschette (122) zum Abführen der Verbrennungsgase hat, wobei der Wärmetauscher derart eingerichtet ist, daß die vom Brenner (6) erzeugten warmen Gase die Bündel radial oder fast radial durchlaufen, wobei sie durch die Lücken, die die Windungen trennen, strömen, wobei außerdem zwischen diesen beiden Bündeln ein Ablenksystem (7) eingefügt und so ausgeführt ist, daß die vom Brenner erzeugten warmen Gase zuerst den primären Wärmetauscher (2a) durchströmen, wobei sie von innen nach außen durch die Lücken, die dessen Windungen trennen, strömen, und dann den sekundären Wärmetauscher (2b) durchströmen, wobei sie von außen nach innen durch die Lücken, die dessen Windungen trennen, strömen, wonach sie durch die Manschette (122) nach außen abgeführt werden, **dadurch gekennzeichnet, daß** zum einen das Ablenksystem (7) aus zwei Platten (7a, 7b) zusammengesetzt ist, die Ablenkplatten genannt werden und die aus einem wärmeisolierenden und hitzebeständigen Material realisiert sind, beispielsweise auf Keramikbasis, die auf der Schraubenachse (X-X') zentriert und parallel nebeneinander mit einem bestimmten Abstand angeordnet sind, und von denen die eine (7a) eine Seite des Röhrenbündels (2a) verschließt, das als primärer Wärmetauscher dient, wohingegen das andere die benachbarte Seite des Röhrenbündels (2b) verschießt, das als sekundärer Wärmetauscher dient, und daß zum anderen durch die Wand des Mantels (1) eine Leitung (8) führt, die dafür eingerichtet ist, ein zusätzliches warmes Gas vom Äußeren in das Innere des Mantels (1) in den Raum (Ω) zuzuführen, der zwischen den beiden Platten (7a, 7b) vorhanden ist, derart, daß dieses warme Gas von außen nach innen die Lücken durchströmen kann, die die Windungen des Röhrenbündels (2b) trennen, das als sekundärer Wärmetauscher dient, und dies entweder einzeln oder gleichzeitig mit den vom Brenner erzeugten warmen Gasen, die bereits die Windungen des Röhrenbündels (2a) durchströmt haben, das als primärer Wärmetauscher dient, wonach sie durch die Manschette (122) nach Außen abgeführt werden.

3. Wärmetauscher nach Anspruch 1 oder 2, **dadurch gekennzeichnet, daß** die Ablenkplatten (7a, 7b) Scheiben sind, von denen jede am Ende eines Bündels (2a bzw. 2b) so koaxial befestigt ist, daß sie deren Innenraum gasdicht verschließen.

4. Wärmetauscher nach einem der Ansprüche 1 bis 3, **dadurch gekennzeichnet, daß** die Ablenkplatten (7a, 7b) durch Zwischenelemente (700) miteinander verbunden sind.

5. Wärmetauscher nach einem der Ansprüche 1 bis 4, **dadurch gekennzeichnet, daß** der Innenraum des als primärer Wärmetauscher dienenden Röhrenbündels (2a) an einem Ende durch eine (7a) der Ablenkplatten verschlossen ist und an seinem anderen Ende durch eine Türe (4), die an der Frontseite des Wärmetauschers befestigt ist, wobei der Brenner (6) durch diese Türe führt und mit dieser fest verbunden ist.

6. Wärmetauscher nach einem der Ansprüche 1 bis 5, **dadurch gekennzeichnet, daß** der Innenraum des als sekundärer Wärmetauscher dienenden Röhrenbündels (2b) an einem Ende durch eine (7b) der Ablenkplatten und an seinem anderen Ende durch die Rückwand (12) des Mantels (1) verschlossen ist.

7. Wärmetauscher nach einem der Ansprüche 1 bis 6, dessen Mantel aus Kunststoff realisiert ist, wohingegen die Leitung (8), die dafür eingerichtet ist, ein warmes Gas von außerhalb des Wärmetauschers in das Innere des Mantels (1), in den Raum zwischen den beiden Platten (7a, 7b), zu führen, aus Metall ist, **dadurch gekennzeichnet, daß** die Bodenwand (13) des Mantels (1) eine Öffnung für den Durchgang und den Halt der metallischen Leitung (8) hat, und daß diese Öffnung einen in das Innere des Mantels (1) umgebogenen Rand (131) hat, wobei diese Leitung (8) an dem umgebogenen Rand (131) mittels einer Randdichtung (80) aus einem wärmeisolierenden Material, beispielsweise Keramik, befestigt ist.

8. Wärmetauscher nach einem der Ansprüche 1 bis 7, **dadurch gekennzeichnet, daß** die Leitung (8) einen im wesentlichen rechteckigen Querschnitt hat, dessen lange Seiten sich parallel zu den Ebenen der Ablenkplatten (7a, 7b) erstrecken.

9. Kondensationswärmetauscher nach einem der Ansprüche 1 bis 8, **dadurch gekennzeichnet, daß** das als primärer Wärmetauscher dienende Röhrenbündel (2a) eine axiale Länge hat, die wesentlich größer ist als diejenige des als sekundärer Wärmetauscher dienenden Röhrenbündels (2b).

10. Wärmetauscher nach einem der Ansprüche 1 bis 9, **dadurch gekennzeichnet, daß** er dafür eingerichtet ist, das Zirkulieren und Aufheizen eines einzigen Fluids, insbesondere von Wasser, im Inneren der einen oder mehreren Röhren zu gestatten, die die Bündel (2a, 2b) bilden.

11. Wärmetauscher nach einem der Ansprüche 1 bis 9, **dadurch gekennzeichnet, daß** er dafür eingerichtet ist, das Zirkulieren und Aufheizen von wenigstens zwei verschiedenen Fluids zu gestatten, die getrennt im Inneren der Röhren zirkulieren, die die Bündel (2a, 2b) bilden.

12. Wärmetauscher nach Anspruch 11, **dadurch gekennzeichnet, daß** er dafür eingerichtet ist, das Zirkulieren und Aufheizen von zwei verschiedenen Fluids zu gestatten, die getrennt zirkulieren, das eine in den einen oder mehreren Röhren, die das Bündel (2a) bilden, das als primärer Wärmetauscher dient, das andere in den einen oder mehreren Röhren, die das Bündel (2b) bilden, das als sekundärer Wärmetauscher dient.
